# EUROPÄISCHE PATENTSCHRIFT

(11) **EP 3 230 137 B1**
(45) Veröffentlichungstag und Bekanntmachung des Hinweises auf die Patenterteilung: **30.09.2020**
(21) Anmeldenummer: 15807672.9
(22) Anmeldetag: 09.12.2015
(51) Int. Cl.: B60T 13/68, B60T 13/66, B60T 17/02

(54) **DRUCKLUFTSYSTEM FÜR LASTKRAFTWAGEN**
PNEUMATIC SYSTEM FOR TRUCKS
SYSTÈME À AIR COMPRIMÉ POUR VÉHICULES POIDS LOURDS

(30) Priorität: 10.12.2014 DE 102014118268
(43) Veröffentlichungstag der Anmeldung: 18.10.2017
(73) Patentinhaber: KNORR-BREMSE Systeme für Nutzfahrzeuge GmbH, 80809 München (DE)
(72) Erfinder: CARL, Dominik, 92348 Berg bei Neumarkt (DE)
(86) Internationale Anmeldenummer: PCT/EP2015/079165
(87) Internationale Veröffentlichungsnummer: WO 2016/091975

(56) Entgegenhaltungen:
- EP-A1- 2 754 594
- DE-A1- 19 954 584
- DE-A1-102009 029 898
- DE-A1-102012 007 365
- DE-A1-102012 107 203
- DE-B3-102011 011 395

## Beschreibung

Die vorliegende Erfindung betrifft ein Druckluftsystem eines Kraftfahrzeugs, umfassend einen Kompressor zur Versorgung wenigstens zweier Druckluftkreise mit Druckluft, wenigstens einen ersten und einen zweiten Druckluftkreis mit jeweils einem Kreissicherungsventil zur pneumatischen Abkopplung der Druckluftkreise untereinander, sowie ein Druckbegrenzungselement zur Begrenzung des Luftdrucks innerhalb des ersten Druckluftkreises..

Das Einsatzgebiet der Erfindung erstreckt sich auf Kraftfahrzeuge, vorzugsweise Lastkraftwagen, die über pneumatisch betätigbare Betriebsbremsen und Feststellbremsen bzw. Parkbremsen verfügen. Das Wirkprinzip von Betriebsbremsen sieht dabei vor, dass die von einem Kompressor erzeugte Druckluft genutzt wird, um einen pneumatischen Aktuator auszulenken, und um dadurch beispielsweise einen Bremsbelag gegen eine, drehfest mit einem Rad verbundene, Bremsscheibe zu drücken. Durch die dabei entstehende Reibung wird das Fahrzeug dann abgebremst. Feststellbremsen oder Parkbremsen haben ein demgegenüber sogenanntes inverses Funktionsprinzip, wobei hier der Bremsbelag beispielsweise durch die Druckfeder eines Federspeichers gegen die Bremsscheibe gedrückt wird, und wo der durch den Kompressor erzeugte Luftdruck dazu genutzt wird, den Bremsbelag bzw. die Feststellbremse wieder zu lösen. Dadurch wird beispielsweise gewährleistet, dass im Falle eines Lecks die Feststellbremsen automatisch angelegt werden.

Darüber hinaus verfügen solche Kraftfahrzeuge üblicherweise über mehrere Druckluftkreise, typischerweise einen für die Feststellbremse, zwei für die Betriebsbremse, und einen für weitere Nebenverbraucher wie eine Luftfederung, eine Türsteuerung oder ein Horn. Um diese Druckluftkreise voneinander pneumatisch zu trennen bzw. abzukoppeln, so dass beispielsweise ein Leck und ein damit verbundener Druckluftverlust in einem Druckluftkreis nicht die anderen drei Druckluftkreise betrifft, sind Kreissicherungsventile vorgesehen, die die einzelnen Druckluftkreise voneinander trennen.

Es existieren ferner gesetzliche Regelungen, die die Funktionsweise der Bremsen und der Druckluftkreise vorgeben. Der Bremskreis des Anhängers, an den die Feststellbremse angeschlossen ist, ist gesetzlich auf einen maximalen Druckwert, beispielsweise 8,5 bar, begrenzt. Demgegenüber werden die Betriebsbremskreise und Nebenverbraucher wie beispielsweise die Luftfederung üblicherweise mit einem höheren Druck betrieben.

Aus der EP 2 754 594 sowie aus der DE 10 2013 011 395 sind Druckluftbremsanlagen bekannt, bei denen für alle sogenannten Kreissicherungsventile der gleicher Öffnungsdruck vorgegeben ist.

Im allgemeinen Stand der Technik ist daher dem Kreissicherungsventil des Druckluftkreises der Parkbremse ein Druckbegrenzungsventil vorgeschaltet, so dass unabhängig von dem durch den Kompressor erzeugten Luftdruck nur der gesetzlich maximal erlaubte Luftdruck in dem Parkbremssystem wirken kann.

Gesetzlich ist ebenfalls vorgesehen, dass die Feststellbremse erst gelöst werden kann, wenn das Fahrzeug über die Betriebsbremsen gebremst werden kann. Es muss also in den Druckluftkreisen zur Betätigung der Betriebsbremse bereits ein minimal notwendiger Luftdruck vorliegen, bevor das Luftdrucksystem der Parkbremse mit Druckluft befüllt werden kann, um ein Lösen der Parkbremsen zu ermöglichen. Es ist also eine Füllreihenfolge zu beachten, wobei die Druckluftkreise der Betriebsbremsen vor dem Druckluftkreis der Parkbremse befüllt werden müssen.

Im allgemein bekannten Stand der Technik ist es üblich, um eine solche Füllreihenfolge sicherzustellen, dass der Öffnungsdruck des Kreissicherungsventils des Druckluftsystems der Parkbremse, also des Anhängers, wesentlich höher gewählt wird als der Öffnungsdruck der Kreissicherungsventile der Betriebsbremskreise. Dadurch, dass, wie oben beschrieben, das Kreissicherungsventil des Druckluftkreises des Anhängers bzw. der Parkbremse in Luftstromrichtung nach dem Druckbegrenzungsventil angeordnet ist, muss der Öffnungsdruck dieses Kreissicherungsventils niedriger gewählt werden als der Begrenzungsdruck des funktionell davor angeordneten Druckbegrenzungsventils. Anderenfalls wäre es nicht möglich, dass sich das Kreissicherungsventil des Druckluftkreises der Parkbremse öffnen kann.

Nachteilhaft hieran ist, dass die Wahl eines niedrigen Öffnungsdruckes des Kreissicherungsventils des Druckluftkreises der Parkbremse dem oben genannten geforderten Prinzip entgegensteht, dass der Druckluftkreis der Parkbremse später bzw. möglichst spät nach den Betriebsbremskreisen mit Druckluft befüllt wird. Hierfür wäre beispielsweise die Wahl eines hohen Öffnungsdruckes wünschenswerter. Um dennoch ein möglichst spätes Öffnen des Sicherungsventils in dem Druck begrenzten Druckluftkreis zu ermöglichen, sind Anwendungen bekannt, die das Kreissicherungsventil sperren und so ein Öffnen verhindern. Eine andere bekannte Möglichkeit sieht vor, dem Kreissicherungsventil ein Sperrventil vorzuschalten, das erst bei definierten Drücken in den Druckluftkreisen der Betriebsbremsen öffnet und eine Versorgung des Druckluftkreises der Parkbremsen bzw. des Anhängers ermöglicht.

Nachteilhaft ist hieran unter anderem die Notwendigkeit weiterer pneumatischer Elemente wie beispielsweise Ventile.

Es ist die Aufgabe der vorliegenden Erfindung, ein Druckluftsystem zu schaffen, bei dem der Druckluftkreis zur Versorgung eines Anhängers bzw. einer Parkbremse möglichst spät befüllt wird, bei einem möglichst einfachen und auf wenige Teile reduzierten Aufbau.

Die Aufgabe wird ausgehend von einem Druckluftsystem gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Druckbegrenzungselement funktionell zwischen dem ersten Druckluftkreis und dem diesen abkoppelnden Kreissicherungsventil angeordnet ist.

Der Vorteil des erfindungsgemäßen Druckluftsystems besteht insbesondere darin, dass zusätzliche Bauteile vermieden werden wodurch gleichzeitig weniger Bauraum für die Verwirklichung des Druckluftsystems von Nöten ist. Da das Druckbegrenzungselement erfindungsgemäß dem Kreissicherungsventil des ersten Druckluftkreises nachgeschaltet ist, kann dieses Kreissicherungsventil einen weitaus höheren Öffnungsdruck aufweisen, als bei einem aus dem allgemein bekannten Stand der Technik hervorgehenden Druckluftsystem. Dadurch ist insbesondere die gewünschte Füllreihenfolge sicher gewährleistet.

Bevorzugterweise ist der erste Druckluftkreis zur Versorgung eines Anhängers oder einer Feststellbremse und der zweite Druckluftkreis zur Betätigung einer Betriebsbremse ausgebildet.

Der Vorteil ist hierbei darin zu sehen, dass insbesondere bei diesen Systemen die gewünschte Füllreihenfolge zweckmäßig und gegebenenfalls gesetzlich vorgeschrieben ist.

Eine vorteilhafte Weiterbildung der Erfindung sieht vor, dass dem Kreissicherungsventil des ersten Druckluftkreises ein Rückschlagventil vorgeschaltet ist.

Der Vorteil ist hierbei in einer pneumatischen Abkopplung des ersten Druckluftkreises zu sehen. Bei einem Druckverlust in einem in Sperrrichtung des Rückschlagventils angeordneten Druckluftreservoir, beispielsweise durch ein Leck, bleibt der Druck im ersten Druckluftkreis stabil.

Eine besonders bevorzugte Ausführungsform der Erfindung sieht vor, dass das Kreissicherungsventil des ersten Druckluftkreises ausgangsseitig das Kreissicherungsventil des zweiten Druckluftkreises angeordnet ist. Diese beiden Kreissicherungsventile sind also sozusagen in Serie geschaltet.

Der Vorteil dieser Ausführungsform besteht insbesondere darin, dass sich somit besonders sicher gewährleisten lässt, dass die vorgesehene Füllreihenfolge eingehalten wird.

Eine bevorzugte Variante dieser Ausführungsform sieht vor, dass ein vorzugsweise vorbelastetes Rückschlagventil zwischen dem Kreissicherungsventil des zweiten Druckluftkreises und dem Kreissicherungsventil des ersten Druckluftkreises angeordnet ist.

Der Vorteil ist hierbei beispielsweise darin zu sehen, dass bei einem Leck im zweiten Druckluftkreis ein Mindestdruck im ersten Druckluftkreis aufrechterhalten wird. Andernfalls würde sich der erste Druckluftkreis über den zweiten Druckluftkreis und das darin enthaltene Leck entlüften können.

Gemäß einer bevorzugten Ausführungsform der Erfindung ist mindestens ein weiterer durch den Kompressor mit Druckluft versorgter Druckluftkreis mit einem diesen abkoppelnden Kreissicherungsventil vorgesehen. Beispielsweise handelt es sich um einen zweiten Druckluftkreis für die Betriebsbremsen.

Vorzugsweise ist zwischen dem Kreissicherungsventil des zweiten Druckluftkreises und dem Kreissicherungsventil des ersten Druckluftkreises ein vorzugsweise vorbelastetes Rückschlagventil angeordnet. Vorzugsweise ist dabei der zweite und der weitere Druckluftkreis jeweils zur Betätigung einer Betriebsbremse ausgebildet.

Der Vorteil kann dann beispielsweise darin gesehen werden, dass die beiden Rückschlagventile unabhängig voneinander im Falle eines Defektes in entweder dem zweiten oder dem weiteren Druckluftkreis den ersten Druckluftkreis bei Anliegen eines Mindestdruckes mit Druckluft versorgen können und diesen pneumatisch im Falle eines Druckluftverlustes im zweiten oder weiteren Druckluftkreis pneumatisch abkoppeln.

Eine bevorzugte Ausführungsform der Erfindung sieht vor, dass der zweite und der weitere Druckluftkreis jeweils zur Betätigung einer Betriebsbremse ausgebildet sind.

Der Vorteil ist hierbei darin zu sehen, dass diese Ausführungsform besonders geeignet für typische im Stand der Technik bekannte Systemen ist.

Eine weitere vorteilhafte Ausbildungsform der Erfindung sieht vor, dass das Druckbegrenzungselement als Druckbegrenzungsventil ausgebildet ist.

Diese Bauform ist vorteilhafter Weise besonders einfach und günstig zu realisieren. Auch ist denkbar, das Druckbegrenzungselement als eingestelltes Rückschlagventil auszuführen.

Weitere die Erfindung verbessernde Maßnahmen werden nachstehend gemeinsam mit der Beschreibung zweier bevorzugter Ausführungsbeispiele der Erfinder anhand der Figuren näher dargestellt. Es zeigen:
- Figur 1: eine Schematisierung eines erfindungsgemäßen Druckluftsystems, und

- Figur 2: eine Schematisierung eines zweiten Ausführungsbeispiels eines erfindungsgemäßen Druckluftsystems.

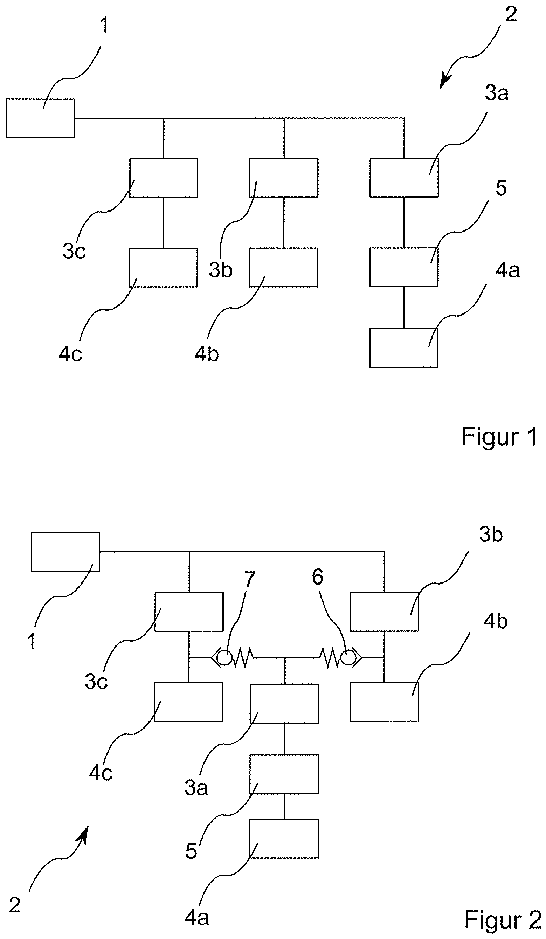

Gemäß Figur 1 versorgt der Kompressor 1 eines Druckluftsystems 2 eines hier nicht weiter dargestellten Kraftfahrzeuges drei Kreissicherungsventile 3a, 3b, 3c mit Druckluft. Dabei ist dem Kreissicherungsventil 3b ein Druckluftkreis 4b in Form eines Betriebsbremskreises und dem Kreissicherungsventil 3c ein Druckluftkreis 4c ebenfalls in Form eines Betriebsbremskreises nachgeschaltet. Ausgangsseitig des Kreissicherungsventils 3a ist ein Druckbegrenzungselement 5 in Form eines Druckbegrenzungsventils angeordnet, an das ausgangsseitig ein Druckluftkreis 4a zur Versorgung eines Anhängers und der Parkbremse angeschlossen ist.

Hierbei ist der Öffnungsdruck des Kreissicherungsventils 3a, das den Druckluftkreis 4a der Parkbremse abkoppelt, viel höher als der Öffnungsdruck der Kreissicherungsventile 3c, 3b der Druckluftkreise 4c, 4b der Betriebsbremsen. Dadurch ist eine Füllreihenfolge gewährleistet, nach der zuerst die Betriebsbremsen mit Druckluft gefüllt werden, wonach anschließend erst die Parkbremsen bzw. Feststellbremsen gelöst werden können.

Gemäß Figur 2 versorgt ein Kompressor 1 eines Druckluftsystems 2 eines nicht weiter dargestellten Kraftfahrzeuges zwei Kreissicherungsventile 3b, 3c mit Druckluft, an die ausgangsseitig Druckluftkreise 4b, 4c in Form von Betriebsbremsen angeordnet sind. Jeweils zwischen einem Kreissicherungsventil 3b; 3c und dem zugeordneten Druckluftkreis 4a; 4b ist jeweils ein Rückschlagventil 6; 7 vorgesehen, welches ab einem ausgangsseitig der Kreissicherungsventile 3a, 3b anliegenden entsprechend ausreichenden Luftdruck geöffnet wird. Dieser Luftdruck sollte in der Praxis möglichst gering gewählt sein, beispielsweise im Bereich um 0,3 bar. Ausgangsseitig sind die Rückschlagventile 6, 7 miteinander und mit dem Kreissicherungsventil 3a eines Druckluftkreises 4a in Form einer Parkbremse verbunden. Zwischen dem Kreissicherungsventil 3a und dem Druckluftkreis 4a ist dabei ein Druckbegrenzungselement 5 in Form eines Druckbegrenzungsventils angeordnet.

Durch die Wahl des Öffnungsdruckes des Kreissicherungsventils 3a kann das befolgen der gewünschten Füllreihenfolge gewährleistet werden.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass ein weiteres Kreissicherungsventil mit zugehörigen Druckluftkreis, beispielsweise für Nebenverbraucher wie eine Druckluftfederung vorgesehen ist. Auch können die jeweiligen Kreissicherungsventile als Überströmventile ausgeführt sein.

### Bezugszeichenliste

- 1: Kompressor
- 2: Druckluftsystem
- 3a, 3b, 3c: Kreissicherungsventil
- 4a, 4b, 4c: Druckluftkreis
- 5: Druckluftbegrenzungselement
- 6: Rückschlagventil
- 7: Rückschlagventil

## Patentansprüche

1. Druckluftsystem (2) eines Kraftfahrzeugs, umfassend einen Kompressor (1) zur Versorgung wenigstens zweier Druckluftkreise (4a, 4b) mit Druckluft, wenigstens einen ersten und einen zweiten Druckluftkreis (4a, 4b) mit jeweils einem Kreissicherungsventil (3a, 3b) zur pneumatischen Abkopplung der Druckluftkreise (4a, 4b) untereinander, sowie ein Druckbegrenzungselement (5) zur Begrenzung des Luftdrucks innerhalb des ersten Druckluftkreises (4a), wobei das Druckbegrenzungselement (5) funktionell zwischen dem ersten Druckluftkreis (4a) und dem diesen abkoppelnden Kreissicherungsventil (3a) angeordnet ist,
**dadurch gekennzeichnet, dass** das Kreissicherungsventil (3a) einen Öffnungsdruck aufweist, der höher als der Öffnungsdruck der Kreissicherungsventile (3b, 3c) des zweiten und eines dritten Druckluftkreises (4a, 4b) ist, wobei der erste Druckluftkreis (4a) der Parkbremse und der zweite sowie dritte Druckluftkreis (4b, 4c) den Betriebsbremsen zugeordnet ist.

2. Druckluftsystem (2) nach Anspruch 1,
**dadurch gekennzeichnet, dass** der erste Druckluftkreis (4a) zur Druckluftversorgung einer Feststellbremse oder eines Anhängers des Kraftfahrzeugs ausgebildet ist.

3. Druckluftsystem (2) nach einem der vorherigen Ansprüche,
**dadurch gekennzeichnet, dass** der zweite Druckluftkreis (4b) zur Betätigung einer Betriebsbremse ausgebildet ist.

4. Druckluftsystem (2) nach einem der vorherigen Ansprüche,
**dadurch gekennzeichnet, dass** dem Kreissicherungsventil (3a) des ersten Druckluftkreises (4a) ein Rückschlagventil (6) vorgeschaltet ist.

5. Druckluftsystem (2) nach einem der vorherigen Ansprüche,
**dadurch gekennzeichnet, dass** das Kreissicherungsventil (3a) des ersten Druckluftkreises (4a) ausgangsseitig des Kreissicherungsventil (3b) des zweiten Druckluftkreises (4b) angeordnet ist.

6. Druckluftsystem (2) nach Anspruch 5,
**dadurch gekennzeichnet, dass** ein Rückschlagventil (6) zwischen dem Kreissicherungsventil (3b) des zweiten Druckluftkreises (4b) und dem Kreissicherungsventil (3a) des ersten Druckluftkreises (4a) angeordnet ist.

7. Druckluftsystem (2) nach einem der vorherigen Ansprüche,
**dadurch gekennzeichnet, dass** mindestens ein weiterer Druckluftkreis (4c), der durch den Kompressor (1) mit Druckluft versorgt ist, mit einem diesen abkoppelnden Kreissicherungsventil (3c), vorgesehen ist.

8. Druckluftsystem (2) nach Anspruch 7,
**dadurch gekennzeichnet, dass** ein Rückschlagventil (7) zwischen dem Kreissicherungsventil (3c) des weiteren Druckluftkreises (4c) und dem Kreissicherungsventil (3a) des ersten Druckluftkreises (4a) angeordnet ist.

9. Druckluftsystem (2) nach Anspruch 7 oder 8,
**dadurch gekennzeichnet, dass** der weitere Druckluftkreis (4c) zur Betätigung einer Betriebsbremse ausgebildet ist.

10. Druckluftsystem (2) nach einem der vorherigen Ansprüche,
**dadurch gekennzeichnet, dass** das Druckbegrenzungselement (5) als Druckbegrenzungsventil ausgebildet ist.

## Claims

1. A compressed-air system (2) of a motor vehicle comprising a compressor (1) for supplying at least two compressed-air circuits (4a, 4b) with compressed air, at least one first and one second compressed-air circuit (4a, 4b), each having a circuit safety valve (3a, 3b) for pneumatically decoupling the compressed-air circuits (4a, 4b) from one another, and a pressure-limiting element (5) for limiting the air pressure inside the first compressed-air circuit (4a), this presume limitation element (5) being arranged in functional terms between the first compressed-air circuit (4a) and the circuit safety valve (3a) that decouples it,
**characterised in that** the circuit safety valve (3a) has an opening pressure that is higher than the opening pressure of the circuit safety valves (3b, 3c) of the second and of a third compressed-air circuit (4b, 4c), the first compressed-air circuit (4a) of the parking brake and the second and third compressed-air circuits (4b, 4c) being assigned to the service brakes.

2. A compressed-air system (2) according to claim 1,
**characterised in that** the first compressed-air circuit (4a) is designed to supply compressed air to a parking brake or to a trailer of the motor vehicle.

3. A compressed-air system (2) according to any one of the preceding claims,
**characterised in that** the second compressed-air circuit (4b) is designed to actuate a service brake.

4. A compressed-air system (2) according to any one of the preceding claims,
**characterised in that** a check valve (6) is connected upstream of the circuit safety valve (3a) of the first compressed-air circuit (4a).

5. A compressed-air system (2) according to any one of the preceding claims,
**characterised in that** the circuit safety valve (3a) of the first compressed-air circuit (4a) is arranged on the output side of the circuit safety valve (3b) of the second compressed-air circuit (4b).

6. A compressed-air system (2) according to claim 5,
**characterised in that** a check valve (6) is arranged between the circuit safety valve (3b) of the second compressed-air circuit (4b) and the circuit safety valve (3a) of the first compressed-air circuit (4a).

7. A compressed-air system (2) according to any one of the preceding claims,
**characterised in that** there is provided at least one further compressed-air circuit (4c) that is supplied with compressed air by the compressor (1) and has a circuit safety valve (3c) that decouples it.

8. A compressed-air system (2) according to claim 7,
**characterised in that** a check valve (7) is arranged between the circuit safety valve (3c) of the further compressed-air circuit (4c) and the circuit safety valve (3a) of the first compressed-air circuit (4a).

9. A compressed-air system (2) according to claim 7 or 8,
**characterised in that** the further compressed-air circuit (4c) is designed to actuate a service brake.

10. A compressed-air system (2) according to any one of the preceding claims,
**characterised in that** the pressure-limiting element (5) is designed as a pressure-limiting valve.

## Revendications

1. Système (2) à air comprimé d'un véhicule automobile, comprenant un compresseur (1) pour l'alimentation en air comprimé d'au moins deux circuits (4a, 4b) d'air comprimé, au moins un premier et un deuxième circuit (4a, 4b) d'air comprimé, ayant chacun une vanne (3a, 3b) de sécurité de circuit pour le découplage pneumatique des circuits (4a, 4b) d'air comprimé entre eux, ainsi qu'un élément (5) de limitation de la pression pour l'alimentation de la pression de l'air dans le premier circuit (4a) d'air comprimé, l'élément (5) de limitation de la pression étant monté fonctionnellement entre le premier circuit (4a) d'air comprimé et la vanne (3a) de sécurité de circuit découplant celui-ci, **caractérisé en ce que** la vanne (3a) de sécurité de circuit a une pression d'ouverture, qui est plus grande que la pression d'ouverture des vannes (3b, 3c) de sécurité de circuit du deuxième et d'un troisième circuits (4a, 4b) d'air comprimé, le premier circuit (4a) d'air comprimé étant associé au frein de stationnement et le deuxième ainsi que le troisième circuits (4b, 4c) d'air comprimé étant associés aux freins de service.

2. Système (2) à air comprimé suivant la revendication 1, **caractérisé en ce que** le premier circuit (4a) d'air comprimé est constitué pour l'alimentation en air comprimé d'un frein de stationnement ou d'une remorque du véhicule automobile.

3. Système (2) à air comprimé suivant l'une des revendications précédentes,
**caractérisé en ce que** le deuxième circuit (4b) d'air comprimé est constitué pour l'actionnement d'un frein de service.

4. Système (2) à air comprimé suivant l'une des revendications précédentes,
**caractérisé en ce qu'**un clapet antiretour (6) est monté en amont de la vanne (3a) de sécurité de circuit du premier circuit (4a) d'air comprimé.

5. Système (2) à air comprimé suivant l'une des revendications précédentes,
**caractérisé en ce que** la vanne (3a) de sécurité de circuit du premier circuit (4a) d'air comprimé est disposée du côté de la sortie de la vanne (3b) de sécurité de circuit du deuxième circuit (4b) d'air comprimé.

6. Système (2) à air comprimé suivant la revendication 5,
**caractérisé en ce qu'**un clapet antiretour (6) est monté entre la vanne (3b) de sécurité de circuit du deuxième circuit (4b) d'air comprimé et la vanne (3a) de sécurité de circuit du premier circuit (4a) d'air comprimé.

7. Système (2) à air comprimé suivant l'une des revendications précédentes,
**caractérisé en ce qu'**au moins un autre circuit (4c) d'air comprimé, qui est alimenté en air comprimé par le compresseur (1), est pourvu d'une vanne (3c) de sécurité de circuit découplant celui-ci.

8. Système (2) à air comprimé suivant la revendication 7,
**caractérisé en ce qu'**un clapet antiretour (7) est monté entre la vanne (3c) de sécurité de circuit de l'autre circuit (4c) d'air comprimé et la vanne (3a) de sécurité de circuit du premier circuit (4a) d'air comprimé.

9. Système (2) à air comprimé suivant la revendication 7 ou 8, **caractérisé en ce que** l'autre circuit (4c) d'air comprimé est constitué pour l'actionnement d'un frein de service.

10. Système (2) à air comprimé suivant l'une des revendications précédentes,
**caractérisé en ce que** l'élément (5) de limitation de la pression est constitué en soupape de limitation de la pression.
